# EUROPEAN PATENT APPLICATION

(11) **EP 4 779 436 A1**
(43) Date of publication of application: **22.07.2026**
(21) Application number: 25869634.3
(22) Date of filing: 16.06.2025
(51) Int. Cl.: G06F 1/18

(54) **MAINBOARD AND SERVER**

(30) Priority: 29.11.2024 CN 202411733639
(71) Applicant: Suzhou Metabrain Intelligent Technology Co., Ltd., Suzhou, Jiangsu 215000 (CN)
(72) Inventor: LI, Xu, Suzhou, Jiangsu 215000 (CN); SUN, Hui, Suzhou, Jiangsu 215000 (CN); KONG, Cai, Suzhou, Jiangsu 215000 (CN); HUAN, Weiwei, Suzhou, Jiangsu 215000 (CN)
(74) Representative: Michalski Hüttermann & Partner mbB
(86) International application number: PCT/CN2025/101213
(87) International publication number: WO 2026/113337

(57) **Abstract**

The present application relates to the field of motherboard structure technology, and discloses a motherboard and a server. The motherboard includes a board body and a first power supply module. The board body is provided with a mounting portion configured to mount a processor. The first power supply module is arranged in the mounting portion, overlaps with the mounting portion along a first direction, and is configured to supply power to the processor, where the first direction is perpendicular to the board body. The motherboard and server disclosed in the present application solve or improve the issues of long power supply path between the processor and the power supply and low power supply efficiency.

## Description

### CROSS-REFERENCE TO RELATED APPLICATION

This application claims the priority of the Chinese Patent application filed on November 29, 2024 before the CNIPA, China National Intellectual Property Administration with the application number of 202411733639.0, and the title of "MOTHERBOARD AND SERVER", which is incorporated herein in its entirety by reference.

### FIELD

The present application relates to the field of motherboard structure technology and more particularly, to a motherboard and a server.

### BACKGROUND

With the development of artificial intelligence and big data technologies, the demand for high-performance computers is increasing. The computing power of processors such as central processing units (CPUs) and graphics processing units (GPUs) has increased, resulting in an increase in power, which has led to a continuous increase in the current supplied to the processors.

In related art, the processor and the power supply are arranged on the same board body, and the power supply is arranged around the processor. However, since the processor is usually arranged in a package structure, the power supply cannot be arranged close to the processor, which will result in a long power supply path and large impedance between the processor and the power supply, resulting in low power supply efficiency of the processor.

In related art, the power supply and the processor are arranged on the front side and the back side of the board body respectively, to shorten the distance between the power supply and the processor. Although the power supply path from the power supply to the processor is shortened to a certain extent and energy loss is reduced, for high-performance processors, the power supply path is still long and the power supply efficiency is low.

### SUMMARY

In view of this, the present application provides a motherboard and a processor system to solve or improve the long path between the processor and the power supply and low power supply efficiency.

In a first aspect, the present application provides a motherboard, including:
a board body, which is provided with a mounting portion configured to mount a processor; and
a first power supply module, arranged in the mounting portion and overlapping with the mounting portion along a first direction, where the first power supply module is configured to supply power to the processor, and the first direction is perpendicular to the board body.

In this embodiment, the mounting portion is arranged on the board body, the processor is mounted on the mounting portion, and the first power supply module is arranged in the mounting portion, so that the first power supply module and the processor are located on a same side of the board body. Compared with the related art, in which the power supply and the processor are arranged on opposite sides of the board body respectively, this embodiment may shorten the power supply path between the first power supply module and the processor, thereby reducing the loss of current on the power supply path, and improving the power supply efficiency.

The first power supply module overlaps with the mounting portion, further shortening the length of the power supply path between the first power supply module and the processor.

In some embodiments of the present application, a socket is provided on a first surface of the board body, and is electrically connected to the board body; the first power supply module is electrically connected to the board body; and a portion of the board body corresponding to the socket along the first direction forms the mounting portion with the socket; and
the first power supply module is arranged in the mounting portion.

In this embodiment, the processor is plugged into the socket, the socket is electrically connected to the board body. The first power supply module is electrically connected to the board body, and supply power to the processor through the socket. As the processor is directly plugged into the socket, this embodiment shortens the power supply path between the first power supply module and the processor, thereby reducing the loss of current on the power supply path, and improving the power supply efficiency.

In some embodiments of the present application, the first power supply module is located in the socket.

In this embodiment, the first power supply module is located in the socket, and the processor is plugged into the socket, which shortens the power supply path between the first power supply module and the socket, thereby shortening the power supply path between the first power supply module and the processor.

In some embodiments of the present application, a through hole is provided on the socket, and the first power supply module is located in the through hole.

In this embodiment, the through hole is arranged corresponding to the board body; the first power supply module is arranged in the through hole, and is electrically connected to the board body; and the processor is plugged into the socket, so that the first power supply module and the processor overlap in the first direction, thereby reducing the distance between the first power supply module and the processor.

In some embodiments of the present application, the motherboard further includes at least one second power supply module, which is arranged on a second surface of the board body, overlaps with the mounting portion along the first direction, and is electrically connected to the first power supply module.

In this embodiment, the second power supply module is arranged on a second surface; the second power supply module and the first power supply module are arranged on two sides of the board body; and the second power supply module supplies power to the first power supply module, and the first power supply module supplies power to the processor, which may reduce the power supply burden of the first power supply module. Therefore, a power supply module with a relatively small volume may be selected as the first power supply module, which is convenient for them to be mounted in the mounting portion to shorten the power supply path.

In some embodiments of the present application, the motherboard further includes a heat sink, which includes a heat dissipation plate and a plurality of heat-conducting members; the board body is provided with a plurality of via holes; the plurality of heat-conducting members pass through the plurality of via holes correspondingly, with two ends connected to the heat dissipation plate and the first power supply module respectively; and the heat dissipation plate abuts against the at least one second power supply module.

In this embodiment, one end of the through hole corresponds to the board body, and the other end of the through hole is covered by the processor. The first power supply module is arranged in the through hole, and in a relatively closed space. The plurality of via holes are connected to the through hole, and the plurality of heat-conducting members pass through the plurality of via holes, one end of each heat-conducting member abuts against the first power supply module, and the other end of each heat-conducting member abuts against the heat dissipation plate, so that the heat of the first power supply module may be transferred to the heat dissipation plate by means of the heat-conducting members for heat dissipation, thereby reducing the temperature of the first power supply module. The second power supply module is arranged on the second surface, and may be in direct contact with the heat dissipation plate to transfer the heat inside the second power supply module to the heat dissipation plate, thereby reducing the temperature of the second power supply module.

The heat emitted by the first power supply module and the second power supply module will be transferred to the processor, causing the temperature of the processor to further increase, affecting the working efficiency of the processor. Therefore, it is necessary to dissipate the heat from the first power supply module and the second power supply module in a timely manner.

Reducing the temperature of the processor may achieve three purposes. First, it may improve the operation stability and reliability of the processor and ensure the normal operation of the computer.

Second, it may slow down the aging of the processor and extend the service life of hardware.

Third, when the processor automatically reduces its frequency due to overheating, reducing the temperature may make the processor restore its normal operating frequency, thereby increasing processing speed. Reducing the temperature may also reduce the power consumption of the processor, allowing it to maintain a higher performance level in a low-power state.

In some embodiments of the present application, a plurality of heat dissipation slots are provided on a surface of the heat dissipation plate away from the at least one second power supply module.

In this embodiment, the heat dissipation plate is provided with a plurality of heat dissipation slots, which may increase the heat dissipation area and improve the heat dissipation effect.

In some embodiments of the present application, two ends of each of the plurality of heat-conducting members are provided with a first heat dissipation fin and a second heat dissipation fin respectively, the first heat dissipation fin is connected to the first power supply module, and the second heat dissipation fin is connected to the heat dissipation plate.

In this embodiment, the first heat dissipation fin is connected to the first power supply module, and the second heat dissipation fin is connected to the heat dissipation plate. The first heat dissipation fin and the second heat dissipation fin may increase the contact areas with the first power supply module and the heat dissipation plate, respectively, thereby improving the heat dissipation effect.

In some embodiments of the present application, a plurality of second heat dissipation fins form an integral structure.

In this embodiment, the plurality of second heat dissipation fins are connected into the integral structure, which may increase the connection strength with the heat dissipation plate, thereby improving the connection stability, and improving the heat dissipation effect.

In some embodiments of the present application, heat dissipation glue is provided between the first heat dissipation fin and the first power supply module; and/or
heat dissipation glue is provided between the second heat dissipation fin and the heat dissipation plate.

In this embodiment, the heat dissipation glue provided between the first heat dissipation fin and the first power supply module improves the connection strength between the first heat dissipation fin and the first power supply module, and the heat dissipation glue provided between the second heat dissipation fin and the heat dissipation plate improves the connection strength between the second heat dissipation fin and the heat dissipation plate.

With high thermal conductivities, the heat dissipation glue may transfer heat more effectively, so that the heat of the first power supply module may be quickly transferred to the first heat dissipation fin, and the heat of the second heat dissipation fin may be quickly transferred to the heat dissipation plate, thereby improving the heat dissipation efficiency.

The heat dissipation glue may effectively absorb and transfer heat from the interior of the first power supply module, thereby reducing the overall operating temperature of the first power supply module. This helps to prevent the first power supply module from failing due to overheating, thereby improving the reliability and service life of the first power supply module.

The heat dissipation glue may achieve a tight connection between the first heat dissipation fin and the first power supply module and between the second heat dissipation fin and the heat dissipation plate, which may reduce vibration and looseness between components and further improve the equipment stability and reliability.

In some embodiments of the present application, the motherboard further includes a plurality of decoupling filter capacitors; at least part of the plurality of decoupling filter capacitors overlap with the first power supply module along the first direction; the plurality of decoupling filter capacitors are arranged on the second surface, and are electrically connected to the board body; and the plurality of heat-conducting members are interspersed among the plurality of decoupling filter capacitors.

In this embodiment, the decoupling filter capacitors are arranged on the second surface to provide a larger space for arranging the first power supply module in the through hole.

The plurality of heat-conducting members are interspersed among the plurality of decoupling filter capacitors, which may reasonably utilize the gaps between the plurality of decoupling filter capacitors, resulting in a more compact structure.

At least part of the plurality of decoupling filter capacitors overlap with the first power supply module along the first direction, which shortens the distance between the first power supply module and the processor. The decoupling filter capacitors may prevent parasitic oscillation caused by the positive feedback path formed by the circuit through the power supply. In other words, this design may effectively eliminate parasitic coupling between circuit networks and ensure the normal operation of the circuit.

In some embodiments of the present application, the first power supply module includes a plurality of power supply units, which are configured to supply power to the processor, and are arranged side by side along a second direction, and the second direction is perpendicular to the first direction.

In this embodiment, the plurality of power supply units supply power to the processor, which may reduce the power supply current of a single power supply unit, thereby reducing the current loss on the power supply path, and improving the power supply efficiency.

In some embodiments of the present application, the first power supply module is a high-frequency voltage regulator configured to regulate a voltage to a rated voltage of the processor; and/or
the second power supply module is a low-frequency voltage regulator configured to reduce a voltage supplied to the first power supply module.

In this embodiment, the high-frequency voltage regulator is small in size. When the high-frequency voltage regulator regulates the voltage to the rated voltage of the processor, when the voltage decreases, the power supply current transmitted from the high-frequency voltage regulator to the processor increases due to the high power of the processor. Therefore, it is necessary to shorten the power supply path between the high-frequency voltage regulator and the processor to reduce current loss. The high-frequency voltage regulator is mounted in the through hole, which may shorten the power supply path and improve the power supply efficiency.

The low-frequency voltage regulator is configured to regulate the total power supply voltage. After this regulation, the total power supply voltage is reduced, but it does not reach the rated voltage of the processor. Therefore, the current is transmitted to the first power supply module for further voltage reduction to reach the rated voltage of the processor. The current transmitted from the second power supply module to the first power supply module is smaller than the current transmitted from the first power supply module to the processor. Therefore, the current loss on the power supply path between the second power supply module and the first power supply module is small.

In some embodiments of the present application, the motherboard further includes a connecting frame connected to the board body, and the heat dissipation plate is connected to the connecting frame.

In a second aspect, the present application further provides a server, which includes the processor and the motherboard, where the processor is mounted on the mounting portion.

The server has the same effects as the motherboard, which will not be repeated here.

### BRIEF DESCRIPTION OF THE DRAWINGS

In order to more explicitly illustrate the technical solutions in the specific embodiments of the present application or the prior art, drawings required for descriptions of the specific embodiments or the prior art are briefly introduced below. Obviously, the drawings described below are some embodiments of the present application. For persons skilled in the art, other drawings may be obtained based on these drawings without creative efforts.
FIG. 1 is a structural schematic diagram of a motherboard according to some embodiments of the present application;
FIG. 2 is a structural schematic diagram of a first power supply module, a board body, a heat-conducting member, and a heat dissipation plate in a motherboard according to some embodiments of the present application;
FIG. 3 is a structural schematic diagram of a plurality of heat-conducting members, a board body, a first power supply module, and a heat dissipation plate in a motherboard according to some embodiments of the present application;
FIG. 4 is a structural schematic diagram of a heat-conducting member in a motherboard according to some embodiments of the present application;
FIG. 5 is a schematic diagram of distribution of a plurality of decoupling filter capacitors and a plurality of second power supply modules on a board body in a motherboard according to some embodiments of the present application;
FIG. 6 is a structural schematic diagram of a socket and a first power supply module in a motherboard according to some embodiments of the present application;
FIG. 7 is a flow chart for assembling of a motherboard according to some embodiments of the present application;
FIG. 8 is a structural schematic diagram of a motherboard in related art; and
FIG. 9 is another structural schematic diagram of a motherboard in related art.

### Reference numerals:

1. board body; 101. first surface; 102. second surface; 103. via hole; 2. socket; 3. through hole; 4. first power supply module; 401. power supply unit; 5. second power supply module; 6. heat sink; 601. heat dissipation plate; 6011. heat dissipation slot; 602. heat-conducting member; 6021. first heat dissipation fin; 6022. second heat dissipation fin; 7. decoupling filter capacitor; 8. processor; 9. power supply; 10. current path; X. first direction; Y. second direction.

### DETAILED DESCRIPTION

To make the purposes, technical solutions, and advantages of some embodiments of the present application clearer, the technical solutions in some embodiments of the present application will be explicitly and completely described below with reference to the drawings in some embodiments of the present application. Obviously, the embodiments described are only some, not all, of the embodiments of the present application. All other embodiments, derived by those skilled in the art based on some embodiments of the present application without the exercise of inventive efforts, are intended to be included within the protective scope of the present application.

With the development of artificial intelligence and big data technologies, the demand for high-performance computers is increasing. The computing power of processors such as CPUs and GPUs has increased, bringing about an increase in power, which has led to a continuous increase in the current supplied to the processors.

In related art, the processor and the power supply are arranged on the same board body, and the power supply is arranged around the processor. However, since the processor is usually arranged in a package structure, the power supply cannot be arranged close to the processor, which will result in a long power supply path and large impedance between the processor and the power supply, resulting in low power supply efficiency of the processor.

In related art, the power supply and the processor are arranged on the front side and the back side of the board body respectively, to shorten the distance between the power supply and the processor. Although the power supply path from the power supply to the processor is shortened to a certain extent and energy loss is reduced, for high-performance processors, the power supply path is still long and the power supply efficiency is low. In order to solve the above technical problems, the present application provides a motherboard and a server.

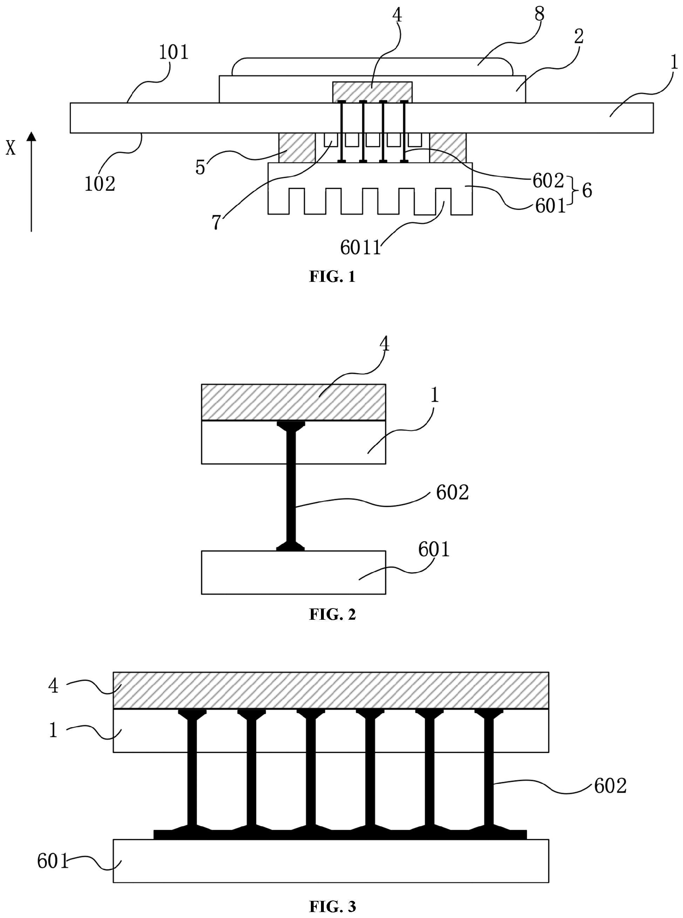

Referring to FIG. 1 to FIG. 9, some embodiments of the present application are described below.

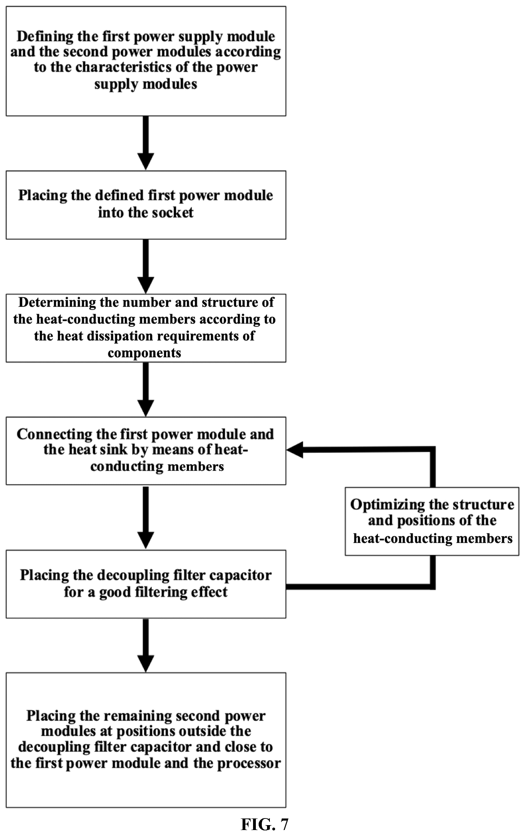

On one hand, some embodiments of the present application provide a motherboard, as shown in FIG. 1 and FIG. 7, including a board body 1 and a first power supply module 4. The specific solution is as follows.

As shown in FIG. 1, the board body 1 is provided with a mounting portion configured to mount a processor 8; the first power supply module 4 is arranged in the mounting portion, overlaps with the mounting portion along a first direction X, and is configured to supply power to the processor 8, where the first direction X is perpendicular to the board body 1.

In some embodiments, as shown in FIG. 1, the mounting portion is arranged on the board body 1, the processor 8 is mounted on the mounting portion, and the first power supply module 4 is arranged in the mounting portion, so that the first power supply module 4 and the processor 8 are located on a same side of the board body 1. Compared with the related art, in which the power supply and the processor 8 are arranged on opposite sides of the board body respectively, this embodiment may shorten the power supply path between the first power supply module 4 and the processor 8, thereby reducing the loss of current on the power supply path, and improving the power supply efficiency.

The first power supply module 4 overlaps with the mounting portion, further shortening the power supply path between each of the first power supply module 4 and the processor 8.

It should be noted that the first power supply module 4 is a switching power supply to supply power to the processor 8. With the development of the switching power supply technology, the switching frequency continues to increase, and the volumes of the inductor and capacitor required by the first power supply module 4 gradually decrease, so that the total volume of the first power supply module 4 has been reduced, making it possible to place it in the mounting portion.

It should be noted that the board body 1 is a circuit board.

In some embodiments, a socket 2 is provided on a first surface 101 of the board body 1, and is electrically connected to the board body 1; the first power supply module 4 is electrically connected to the board body 1; and a portion of the board body 1 corresponding to the socket 2 along the first direction X forms the mounting portion with the socket 2; and
the first power supply module 4 is arranged in the mounting portion.

The socket 2 is a CPU mount seat, which is an existing structure.

In this embodiment, as shown in FIG. 1, the processor 8 is plugged into the socket 2, which is electrically connected to the board body 1. The first power supply module 4 is electrically connected to the board body 1, and supplies power to the processor 8 through the socket 2. As the processor 8 is directly plugged into the socket 2, this embodiment shortens the power supply path between the first power supply module 4 and the processor 8, thereby reducing the loss of current on the power supply path, and improving the power supply efficiency.

In some embodiments, the first power supply module 4 may also be arranged in the board body 1.

In some embodiments, as shown in FIG. 1, the first power supply module 4 is located in the socket 2.

In this embodiment, the first power supply module 4 is located in the socket 2, and the processor 8 is plugged into the socket 2, which shortens the power supply path between each of the first power supply module 4 and the socket 2, thereby further shortening the power supply path between the first power supply module 4 and the processor 8.

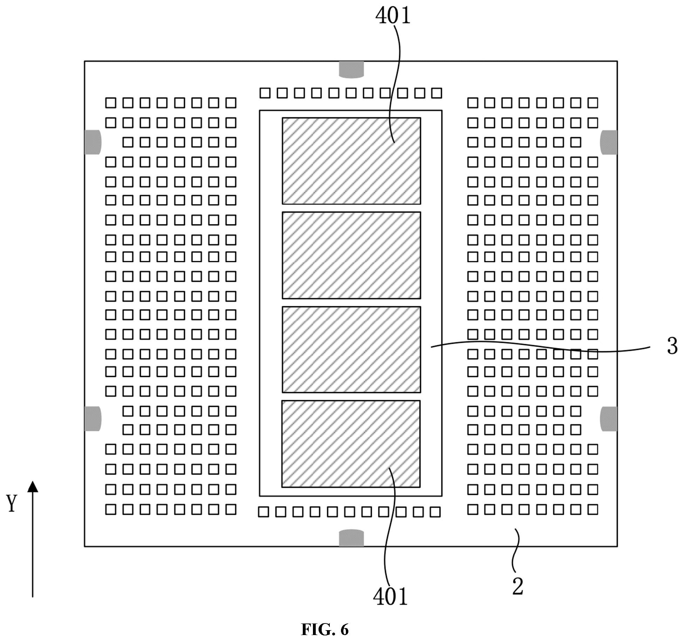

In some embodiments, as shown in FIG. 1 and FIG. 6, a through hole 3 is provided on the socket 2, and the first power supply module 4 is located in the through hole 3.

In this embodiment, the through hole 3 is arranged corresponding to the board body 1, the first power supply module 4 is arranged in the through hole 3 and is electrically connected to the board body 1, and the processor 8 is plugged into the socket 2, so that the first power supply module 4 and the processor 8 overlap with each other in the first direction X, thereby reducing the distance between the first power supply module 4 and the processor 8.

In some embodiments, the motherboard further includes at least one second power supply module 5, which is arranged on a second surface 102 of the board body 1, overlaps with the mounting portion along the first direction X, and is electrically connected to the first power supply module 4.

In some embodiments, the second surface 102 is arranged opposite to the first surface 101.

In this embodiment, the second power supply module 5 is arranged on the second surface 102; the second power supply module 5 and the first power supply module 4 are arranged on two sides of the board body 1; the second power supply module 5 supplies power to the first power supply module 4; and the first power supply module 4 supplies power to the processor 8, which may reduce the power supply burden of the first power supply module 4. Therefore, a power supply module with a relatively small volume may be selected as the first power supply module 4, which is convenient for it to be mounted in the mounting portion to shorten the power supply path.

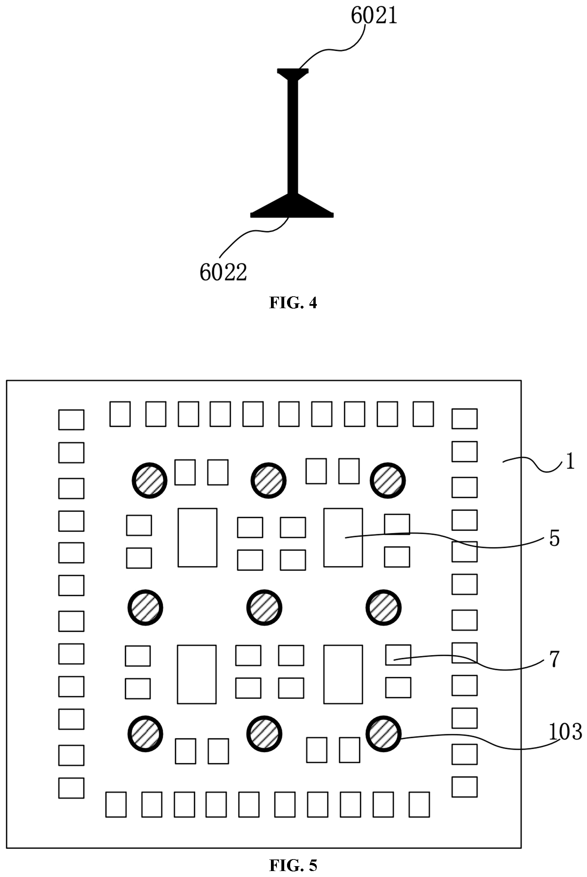

In some embodiments, as shown in FIG. 1 and FIG. 5, a projection of the second power supply module 5 in the first direction X is arranged along a circumferential direction of the first power supply module 4.

In this embodiment, the first power supply module 4 and the second power supply module 5 are arranged on the first surface 101 and the second surface 102 of the board body 1, respectively, and the second power supply module 5 is located outside the first power supply module 4, which is convenient for supplying power to the first power supply module 4. The second power supply module 5 is arranged along the circumferential direction of the first power supply module 4, which may reserve space for the portion of the first power supply module 4 that corresponds to the second surface 102 along the first direction X, to facilitate mounting the decoupling filter capacitors 7.

The plurality of second power supply modules 5 are arranged at intervals, with gaps between the plurality of second power supply modules 5, to improve the heat dissipation effect of the second power supply modules 5.

In some embodiments, as shown in FIG. 1 to FIG. 4, the heat sink 6 includes a heat dissipation plate 601 and a plurality of heat-conducting members 602; the board body 1 is provided with a plurality of via holes 103; the plurality of heat-conducting members 602 pass through the plurality of via holes 103 correspondingly, with two ends connected to the heat dissipation plate 601 and the first power supply module 4 respectively; and the heat dissipation plate 601 abuts against the second power supply module 5.

In this embodiment, the heat emitted by the first power supply module 4 and the second power supply module 5 will be transferred to the processor 8, causing the temperature of the processor 8 to further increase, affecting the working efficiency of the processor 8. Therefore, it is necessary to dissipate the heat from the first power supply module 4 and the second power supply module 5 in a timely manner.

Reducing the temperature of the processor 8 may achieve three purposes. First, it may improve the operation stability and reliability of the processor 8 and ensure the normal operation of the computer.

Second, it may slow down the aging of the processor 8 and extend the service life of hardware.

Third, when the processor 8 automatically reduces its frequency due to overheating, reducing the temperature may make the processor restore its normal operating frequency, thereby increasing processing speed. Reducing the temperature may also reduce the power consumption of the processor 8, allowing it to maintain a higher performance level in a low-power state.

In this embodiment, one end of the through hole 3 corresponds to the board body 1, and the other end of the through hole 3 is covered by the processor 8. The first power supply module 4 is arranged in the through hole 3, and is in a relatively closed space. The plurality of via holes 103 are connected to the through hole 3, and the plurality of heat-conducting members 602 pass through the plurality of via holes 103 correspondingly, one end of the heat-conducting member abuts against the first power supply module 4, and the other end of the heat-conducting member abuts against the heat dissipation plate 601, so that the heat of the first power supply module 4 may be transferred to the heat dissipation plate 601 by means of the heat-conducting members 602 for heat dissipation, thereby reducing the temperature of the first power supply module 4. The second power supply module 5 is arranged on the second surface 102, and may be in direct contact with the heat dissipation plate 601 to transfer the heat of the second power supply module 5 to the heat dissipation plate 601, thereby reducing the temperature of the second power supply module 5.

In some embodiments, the heat-conducting members 602 may be made of a heat-conductive material such as copper, iron, silicon carbide, and graphite.

In some embodiments, each of the heat-conducting members 602 is a columnar body with two wide ends and a narrow middle part. The area occupied by the heat-conducting members 602 on the second surface 102 is small, leaving a large space on the second surface 102 to the maximum extent, to further arrange a large number of decoupling filter capacitors 7 on the second surface 102. This design solves the issue that the decoupling filter capacitors 7 are arranged at positions farther away from the processor 8 on the second surface 102 to avoid interference with the vertical power supply module as in relevant vertical power supply solutions.

It should be noted that the present application takes into account the positions of both the vertical power supply module and the decoupling filter capacitors 7, both of which may be arranged at positions close to the processor 8. For the vertical power supply technology, both power supply efficiency and decoupling filtering effect are improved.

In some embodiments, as shown in FIG. 4, the two ends of each of the heat-conducting members 602 extend outward to form tapered connection ends, resulting in larger contact areas with the first power supply module 4 and the heat sink 6, thereby improving the heat conduction effect.

In some embodiments, as shown in FIG. 5, nine via holes 103 are provided and arranged in an array. The nine via holes 103 are located among the plurality of decoupling filter capacitors 7, and the heat-conducting members 602 are used to extend the distance between the first power supply module 4 and the heat dissipation plate 601, resulting in a sufficient space for the decoupling filter capacitors 7.

In some embodiments, if air cooling is used for heat dissipation, the heat sink 6 may be made of a thermally conductive material such as aluminum alloy, pure copper, and copper-aluminum composite material. The heat sink 6 may also be a liquid-cooled cold plate heat sink 6.

In some embodiments, as shown in FIG. 1, a plurality of heat dissipation slots 6011 are provided on a surface of the heat dissipation plate 601 away from the second power supply module 5.

In this embodiment, the heat dissipation plate 601 is provided with a plurality of heat dissipation slots 6011, which may increase the heat dissipation area and improve the heat dissipation effect.

In some embodiments, as shown in FIG. 2 to FIG. 4, the two ends of each of the heat-conducting members 602 are provided with a first heat dissipation fin 6021 and a second heat dissipation fin 6022 respectively, the first heat dissipation fin 6021 is connected to the first power supply module 4, and the second heat dissipation fin 6022 is connected to the heat dissipation plate 601.

In this embodiment, the first heat dissipation fin 6021 is connected to the first power supply module 4, and the second heat dissipation fin 6022 is connected to the heat dissipation plate 601. The first heat dissipation fin 6021 and the second heat dissipation fin 6022 may increase the contact areas with the first power supply module 4 and the heat dissipation plate 601, thereby improving the heat dissipation effect.

In some embodiments, a plurality of second heat dissipation fins 6022 form an integral structure.

In this embodiment, the plurality of second heat dissipation fins 6022 are connected into the integral structure, which may increase the connection strength with the heat dissipation plate 601, thereby improving the connection stability, and improving the heat dissipation effect.

In some embodiments, heat dissipation glue is provided between the first heat dissipation fin 6021 and the first power supply module 4; and/or
heat dissipation glue is provided between the second heat dissipation fin 6022 and the heat dissipation plate 601.

In this embodiment, the heat dissipation glue provided between the first heat dissipation fin 6021 and the first power supply module 4 improves the connection strength between the first heat dissipation fin 6021 and the first power supply module 4, and the heat dissipation glue provided between the second heat dissipation fin 6022 and the heat dissipation plate 601 improves the connection strength between the second heat dissipation fin 6022 and the heat dissipation plate 601.

With high thermal conductivities, the heat dissipation glue may transfer heat more effectively, so that the heat of the first power supply module 4 may be quickly transferred to the first heat dissipation fin 6021, and the heat of the second heat dissipation fin 6022 may be quickly transferred to the heat dissipation plate 601, thereby improving the heat dissipation efficiency.

The heat dissipation glue may effectively absorb and transfer the heat from the interior of the first power supply module 4, thereby reducing the overall operating temperature of the first power supply module 4. This helps to prevent the first power supply module 4 from failing due to overheating, thereby improving the reliability and service life of the first power supply module 4.

The heat dissipation glue may achieve a tight connection between the first heat dissipation fin 6021 and the first power supply module 4 and between the second heat dissipation fin 6022 and the heat dissipation plate 601, which may reduce vibration and looseness between components and further improve the equipment stability and reliability.

In some embodiments, as shown in FIG. 1 and FIG. 5, the motherboard further includes a plurality of decoupling filter capacitors 7, where at least part of the plurality of decoupling filter capacitors 7 overlap with the first power supply module 4 along the first direction X; the plurality of decoupling filter capacitors 7 are arranged on the second surface 102, and are electrically connected to the board body 1; and the plurality of heat-conducting members 602 are interspersed among the plurality of decoupling filter capacitors 7.

In this embodiment, as shown in FIG. 1, the decoupling filter capacitors 7 are arranged on the second surface 102 to provide a larger space for arranging the first power supply module 4 in the through hole 3.

The plurality of heat-conducting members 602 are interspersed among the plurality of decoupling filter capacitors 7, which may reasonably utilize the gaps between the plurality of decoupling filter capacitors 7, resulting in a more compact structure.

At least part of the plurality of decoupling filter capacitors 7 overlap with the first power supply module 4 along the first direction X, which shortens the distance between the first power supply module 4 and the processor 8. The decoupling filter capacitors 7 may prevent parasitic oscillation caused by the positive feedback path formed by the circuit through the power supply. In other words, this design may effectively eliminate parasitic coupling between circuit networks and ensure the normal operation of the circuit.

In some embodiments, as shown in FIG. 1, FIG. 5, and FIG. 7, the power supply modules are defined as the first power supply module 4 and the second power supply module 5, and the first power supply module 4 is mounted in the socket 2. According to the power of the first power supply module 4, the number and arrangement of the heat-conducting members 602 are determined. The plurality of decoupling filter capacitors 7 are arranged on the second surface 102 and located around the heat-conducting members 602, and the second power supply module 5 is mounted on the second surface 102 and arranged outside the decoupling filter capacitors 7.

In some embodiments, as shown in FIG. 6, the first power supply module 4 includes a plurality of power supply units 401, the plurality of power supply units 401 are configured to supply power to the processor 8, and are arranged side by side along a second direction Y, the second direction Y is perpendicular to the first direction X.

In this embodiment, the plurality of power supply units 401 supply power to the processor 8, which may reduce the power supply current of a single power supply unit 401, thereby reducing the current loss on the power supply path, and improving the power supply efficiency.

In some embodiments, the first power supply module 4 is a high-frequency voltage regulator configured to regulate the voltage to a rated voltage of the processor 8; and/or
the second power supply module 5 is a low-frequency voltage regulator configured to reduce the voltage supplied to the first power supply module 4.

In this embodiment, the high-frequency voltage regulator is small in size. When the high-frequency voltage regulator regulates the voltage to the rated voltage of the processor 8, when the voltage decreases, the power supply current transmitted from the high-frequency voltage regulator to the processor 8 increases due to the high power of the processor 8. Therefore, it is necessary to shorten the power supply path between the high-frequency voltage regulator and the processor 8 to reduce current loss. The high-frequency voltage regulator is mounted in the through hole 3, which may shorten the power supply path and improve the power supply efficiency.

The low-frequency voltage regulator is configured to regulate the total power supply voltage. After this regulation, the total power supply voltage is reduced, but it does not reach the rated voltage of the processor 8. Therefore, the current is transmitted to the first power supply module 4 for further voltage reduction to reach the rated voltage of the processor 8. The current transmitted from the second power supply module 5 to the first power supply module 4 is smaller than the current transmitted from the first power supply module 4 to the processor 8. Therefore, the current loss on the power supply path between the second power supply module 5 and the first power supply module 4 is small.

In some embodiments, the plurality of second power supply modules 5 are arranged in parallel, and are electrically connected to the main power supply. The plurality of first power supply modules 4 are arranged in parallel, and are electrically connected to the socket 2 for supplying power to the processor 8.

In some embodiments, the voltage of the main power supply is 12 V. After the plurality of second power supply modules 5 step down the voltage, the voltage of the first power supply module 4 is 5 V. Then, the first power supply modules 4 further step down the voltage to 1.2 V, which is the rated voltage of the processor 8. When the power is constant, the lower the voltage, the larger the current. Therefore, when the first power supply modules 4 step down the voltage to 1.2 V, the current is larger. The first power supply modules 4 are on the same side of the board body 1 as the processor 8 and overlap with the processor 8 along the first direction X, which may greatly shorten the power supply path from each of the first power supply modules 4 to the processor 8, thereby reducing the loss of current on the power supply path, and improving the power supply efficiency.

In some embodiments, the power supply modules for supplying power to the processor 8 are defined as the first power supply module 4 and the second power supply module 5. The first power supply module 4 is smaller in size with a higher switching frequency, and the second power supply module 5 is larger in size with a lower switching frequency. The low-frequency second power supply module 5 is placed at the bottom of the board body 1, and the high-frequency first power supply module 4 is placed in the socket 2. The high-frequency first power supply module 4 is located inside the socket 2, realizing the shortest power supply path of the power supply current, thereby minimizing the power supply path loss. In addition, since the first power supply module 4 has been moved to the first surface 101, leaving a space on the second surface 102 for the decoupling filter capacitors 7.

In some embodiments, the motherboard further includes a connecting frame, which is connected to the board body 1, and the heat dissipation plate 601 is connected to the connecting frame.

In some embodiments, the connecting frame includes a plurality of connecting rods. For each of the connecting rods, one end is connected to the board body 1, and the other end is connected to the heat dissipation plate 601. The connection mode may be welding or bolting.

On the other hand, some embodiments of the present application further provide a server, which includes the processor 8 and the motherboard. The processor 8 is mounted on the mounting portion, and is electrically connected to the first power supply module 4.

The server may be any one of a mail server, a database server, an application server, a Web server, a virtualization server, a cloud computing server, a website server, or a dedicated server.

The server has the same effects as the motherboard, which will not be repeated here.

The following is a comprehensive description of all the solutions described above based on some embodiments in combination with FIG. 1 to FIG. 9.

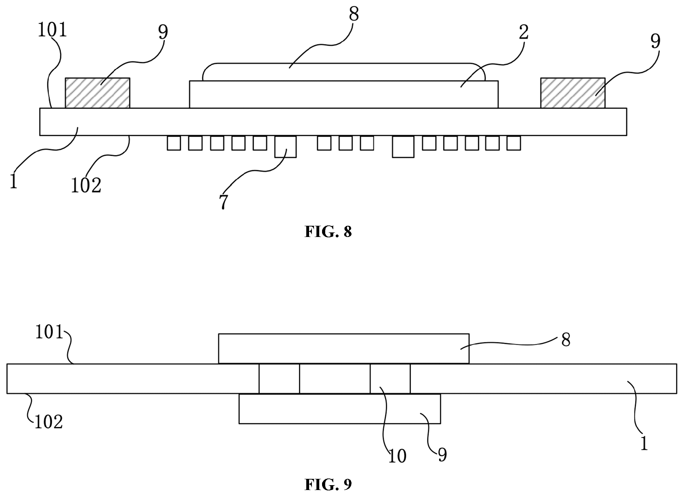

In related art, as shown in FIG. 8, the power supplies 9 are arranged around the processor 8, resulting in a long current path 10 and low power supply efficiency.

In related art, as shown in FIG. 9, the vertical power supply technology is adopted, and the power supply 9 is arranged on the second surface 102 of the board body 1. The power supply 9 overlaps with the processor 8 along the first direction X, which shortens the current path 10 to a certain extent. However, the power supply 9 occupies the space for the decoupling filter capacitors 7, causing the decoupling filter capacitors 7 to be far away from the first power supply module 4 and the processor 8, which cannot effectively prevent parasitic oscillation caused by the positive feedback path formed by the circuit through the power supply 9. In other words, this design cannot effectively eliminate parasitic coupling between circuit networks, which affects the normal operation of the circuit.

In the embodiments of the present application, the main power supply is connected to the board body 1, and is connected to a plurality of second power supply modules 5 through the board body 1. The plurality of second power supply modules 5 perform a primary voltage reduction on the voltage and transmit the current after voltage reduction to a plurality of first power supply modules 4, the plurality of first power supply modules 4 then perform a secondary voltage reduction to regulate the voltage to the rated voltage of the processor 8. For example, the voltage of the main power supply is 12 V. After the plurality of second power supply modules 5 step down the voltage, the voltage of the first power supply module 4 is 5 V. Then, the first power supply modules 4 further step down the voltage to 1.2 V, which is the rated voltage of the processor 8. When the power is constant, the lower the voltage, the larger the current. Therefore, when the first power supply modules 4 step down the voltage to 1.2 V, the current is larger. The first power supply modules 4 are on the same side of the board body 1 as the processor 8 and overlap with the processor 8 along the first direction X, which may greatly shorten the power supply path from each of the first power supply modules 4 to the processor 8, thereby reducing the loss of current on the power supply path, and improving the power supply efficiency.

The first power supply modules 4 are mounted in the through hole 3, and the decoupling filter capacitors 7 originally in the through hole 3 are arranged on the second surface 102, to shorten the power supply path between each of the first power supply modules 4 and the processor 8. At least part of the plurality of decoupling filter capacitors 7 overlap with the first power supply modules 4 along the first direction X, which shortens the distance between each of the first power supply modules 4 and the processor 8. The decoupling filter capacitors 7 may prevent parasitic oscillation caused by the positive feedback path formed by the circuit through the power supply. In other words, this design may effectively eliminate parasitic coupling between circuit networks and ensure the normal operation of the circuit.

As shown in FIG. 1, FIG. 5, and FIG. 6, the first power supply modules 4 are arranged in the through hole 3, and the number of heat-conducting members 602 is determined to be nine according to the heat dissipation requirements of the first power supply modules 4. For each of the heat-conducting members 602, the first heat dissipation fin 6021 abuts against the first power supply modules 4. A plurality of second heat dissipation fins 6022 form an integrated structure, which may increase the connection strength with the heat dissipation plate 601, thereby improving the connection stability, and improving the heat dissipation effect. The plurality of decoupling filter capacitors 7 are arranged on the second surface 102 of the board body 1, and the plurality of second power supply modules 5 are arranged outside the plurality of decoupling filter capacitors 7 and close to the first power supply modules 4 and the processor 8.

As shown in FIG. 5, the number of via holes 103 is the same as that of heat-conducting members 602, and the nine via holes 103 are arranged in an array. The nine via holes 103 are located among the plurality of decoupling filter capacitors 7, and the heat-conducting members 602 are used to extend the distance between each of the first power supply modules 4 and the heat dissipation plate 601, resulting in a sufficient space for the decoupling filter capacitors 7.

As shown in FIG. 4, each of the heat-conducting members 602 is a columnar body with two wide ends and a narrow middle part. The area occupied by the heat-conducting members 602 on the second surface 102 is small, leaving a large space on the second surface 102 to the maximum extent, to further arrange a large number of decoupling filter capacitors 7 on the second surface 102. This design solves the issue that the decoupling filter capacitors 7 are arranged at positions farther away from the processor 8 on the second surface 102 to avoid interference with the vertical power supply module as in relevant vertical power supply solutions.

The two ends of each of the heat-conducting members 602 extend outward to form tapered connection ends, resulting in larger contact areas with the first power supply modules 4 and the heat sink 6, thereby improving the heat conduction effect.

The present application takes into account the positions of both the vertical power supply module and the decoupling filter capacitors 7, both of which may be placed at positions close to the processor 8. For the vertical power supply technology, both power supply efficiency and decoupling filtering effect are improved.

Although some embodiments of the present application are described in conjunction with the drawings, those skilled in the art may make various modifications and variations without departing from the spirit and scope of the present application, and such modifications and variations shall fall within the scope defined by the present application.

## Claims

1. A motherboard, **characterized in that** the motherboard comprises:
a board body (1), wherein the board body (1) is provided with a mounting portion configured to mount a processor (8); and
a first power supply module (4), arranged in the mounting portion and overlapping with the mounting portion along a first direction (X), wherein the first power supply module (4) is configured to supply power to the processor (8), and the first direction (X) is perpendicular to the board body (1).

2. The motherboard according to claim 1, **characterized in that** the first power supply module (4) and the processor (8) are located on a same side of the board body (1).

3. The motherboard according to claim 1, **characterized in that** a socket (2) is provided on a first surface (101) of the board body (1), and is electrically connected to the board body (1); the first power supply module (4) is electrically connected to the board body (1); and a portion of the board body (1) corresponding to the socket (2) along the first direction (X) forms the mounting portion with the socket (2); and
the first power supply module (4) is arranged in the mounting portion.

4. The motherboard according to claim 3, **characterized in that** the first power supply module (4) supplies power to the processor (8) through the socket (2), and the processor (8) is plugged into the socket (2).

5. The motherboard according to claim 3, **characterized in that** the first power supply module (4) is located in the socket (2).

6. The motherboard according to claim 5, **characterized in that** a through hole (3) is provided on the socket (2), and the first power supply module (4) is located in the through hole (3).

7. The motherboard according to any one of claims 1 to 6, **characterized in that** the motherboard further comprises at least one second power supply module (5), the at least one second power supply module (5) is arranged on a second surface (102) of the board body (1), overlaps with the mounting portion along the first direction (X), and is electrically connected to the first power supply module (4).

8. The motherboard according to claim 7, **characterized in that** a projection of the at least one second power supply module (5) in the first direction (X) is arranged along a circumferential direction of the first power supply module (4).

9. The motherboard according to claim 8, **characterized in that** a plurality of second power supply modules (5) are arranged at intervals, with gaps between the plurality of second power supply modules (5).

10. The motherboard according to claim 7, **characterized in that** the motherboard further comprises a heat sink (6), the heat sink (6) comprises a heat dissipation plate (601) and a plurality of heat-conducting members (602); the board body (1) is provided with a plurality of via holes (103); the plurality of heat-conducting members (602) pass through the plurality of via holes (103) correspondingly, with two ends connected to the heat dissipation plate (601) and the first power supply module (4) respectively; and the heat dissipation plate (601) abuts against the at least one second power supply module (5).

11. The motherboard according to claim 10, **characterized in that** each of the plurality of heat-conducting members (602) is a columnar body with two wide ends and a narrow middle part, and the two ends of each of the plurality of heat-conducting members extend outward to form tapered connection ends.

12. The motherboard according to claim 10, **characterized in that** a plurality of heat dissipation slots (6011) are provided on a surface of the heat dissipation plate (601) away from the at least one second power supply module (5).

13. The motherboard according to claim 10, **characterized in that** the two ends of each of the plurality of heat-conducting members (602) are provided with a first heat dissipation fin (6021) and a second heat dissipation fin (6022) respectively, the first heat dissipation fin (6021) is connected to the first power supply module (4), and the second heat dissipation fin (6022) is connected to the heat dissipation plate (601).

14. The motherboard according to claim 13, **characterized in that** a plurality of second heat dissipation fins (6022) form an integral structure.

15. The motherboard according to claim 13, **characterized in that** heat dissipation glue is provided between the first heat dissipation fin (6021) and the first power supply module (4); and/or
heat dissipation glue is provided between the second heat dissipation fin (6022) and the heat dissipation plate (601).

16. The motherboard according to claim 10, **characterized in that** the motherboard further comprises a plurality of decoupling filter capacitors (7), at least part of the plurality of decoupling filter capacitors (7) overlap with the first power supply module (4) along the first direction (X); the plurality of decoupling filter capacitors (7) are arranged on the second surface (102), and are electrically connected to the board body (1); and the plurality of heat-conducting members (602) are interspersed among the plurality of decoupling filter capacitors (7).

17. The motherboard according to any one of claims 1 to 6, **characterized in that** the first power supply module (4) comprises a plurality of power supply units (401), the plurality of power supply units (401) are configured to supply power to the processor (8), and are arranged side by side along a second direction (Y), wherein the second direction (Y) is perpendicular to the first direction (X).

18. The motherboard according to claim 7, **characterized in that** the first power supply module (4) is a high-frequency voltage regulator configured to regulate a voltage to a rated voltage of the processor (8); and/or
the at least one second power supply module (5) is a low-frequency voltage regulator configured to reduce a voltage supplied to the first power supply module (4).

19. The motherboard according to claim 10, **characterized in that** the motherboard further comprises a connecting frame connected to the board body (1), and the heat dissipation plate (601) is connected to the connecting frame.

20. A server, **characterized in that** the server comprises the processor (8) and the motherboard according to any one of claims 1 to 19, and the processor (8) is mounted on the mounting portion.
